Europäisches Patentamt

European Patent Office

Office européen des brevets

(11) Publication number: **0 432 786 B1**

# EUROPEAN PATENT SPECIFICATION

(45) Date of publication of patent specification: **07.06.95**  (51) Int. Cl.[6]: **F16H 25/12**

(21) Application number: **90124157.0**

(22) Date of filing: **13.12.90**

(54) **Mechanism for the conversion of rotatory motion into reciprocating motion and vice versa.**

(43) Date of publication of application:
**19.06.91 Bulletin 91/25**

(45) Publication of the grant of the patent:
**07.06.95 Bulletin 95/23**

(84) Designated Contracting States:
**AT BE CH DE DK ES FR GB GR IT LI LU NL SE**

(56) References cited:
**GB-A- 1 181 881**
**US-A- 2 928 289**
**US-A- 3 443 446**

(73) Proprietor: **Lopatik, Boris Borisovic**
**K. Libkniecht d.9,Kv. 78, Orechovo-Zuevo**
**Moskovskaja Oblast 142600 (SU)**

Proprietor: **Martynov, Nikolaj Ivanovic**
**Zapadnaja, 11-2**
**186750 Sortavala (SU)**

(72) Inventor: **Lopatik, Boris Borisovic**
**K. Libkniecht d.9,Kv. 78, Orechovo-Zuevo**
**Moskovskaja Oblast 142600 (SU)**
Inventor: **Martynov, Nikolaj Ivanovic**
**Zapadnaja, 11-2**
**186750 Sortavala (SU)**

(74) Representative: **Jorio, Paolo et al**
**Studio Torta,**
**Via Viotti, 9**
**I-10121 Torino (IT)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3.10/3.09/3.3.3)

## Description

The present invention relates to a mechanism for the conversion of rotary motion into reciprocating motion and vice versa.

Such mechanisms are known to substantially consist of a pair of coaxial disks facing each other, one rotatable about its axis and the other constrained to translate along such an axis. Said disks present relevant frontal rolling surfaces facing each other and having a closed, circular shape and an undulated profile; a number of rolling bodies are inserted between said rolling surfaces, and resilient means generate an axial load such as to ensure the reciprocal contact between disks and rolling bodies.

When operated, said rolling bodies roll without sliding on their rolling surfaces; the relative rotation (or translation, depending on which disk acts as drive member) between the disks provides for the rolling bodies to alternately insert between convexities and concavities of the disks; each turn of the rotating disk corresponds to a number of reciprocating motion cycles of the translating disk equivalent to half the number of waves of the rolling surfaces. A mechanism like the one briefly described above is disclosed in GB-A-1 181 881. However, known mechanisms have a drawback.

When operated, besides normal forces causing the mechanism to operate, inertial and gravitational tangential stress as well as consequent tangential, elastic strain are generated between rolling bodies and relevant disks rolling surfaces, which cause a progressive displacement of the rolling bodies from their nominal position. Such a progressive displacement of the rolling bodies hinders the rolling bodies synchronization and causes the relative position between drive and driven member to be indefinite; for such reasons, mechanisms like the one briefly described above have not as yet been applied to industry. An aim of this invention is to provide a mechanism of the type described above, as may overcome said drawback.

This aim is attained by a mechanism for the conversion of a rotary motion about an axis into a linear, reciprocating motion along the same axis as claimed in Claim 1.

The present invention will be better described by way of some non-limiting examples, with reference to the accompanying drawings, in which:

Fig. 1 shows an elevation and a partial axial section of such a mechanism as obtained according to a first embodiment of the present invention;

Fig. 2 shows a similar view as in Fig. 1, in a different operating position;

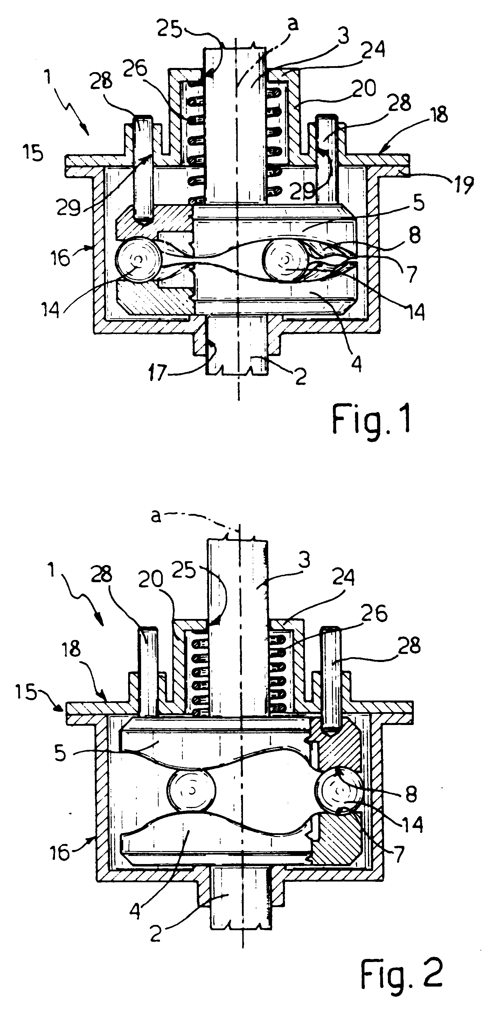

Fig.s 3, 4 and 5 show schematic part section views on a plane of various positions of the mechanism in Fig. 1 obtained by means of a cylindrical surface, coaxial to the same mechanism, and show different relative positions of the rolling bodies and relevant rolling surfaces;

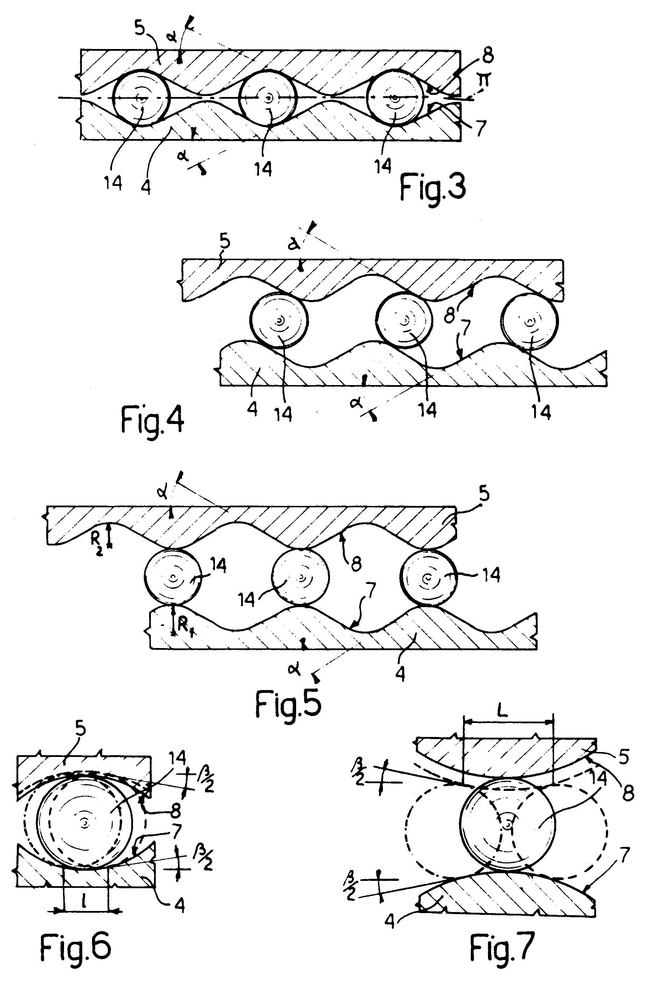

Fig. 6 shows schematic views in detail of the relative position of a rolling body and of the rolling surfaces about a bottom dead center position of the mechanism;

Fig. 7 shows schematic views in detail of the relative position of a rolling body and of the rolling surfaces about a top dead center position of the mechanism;

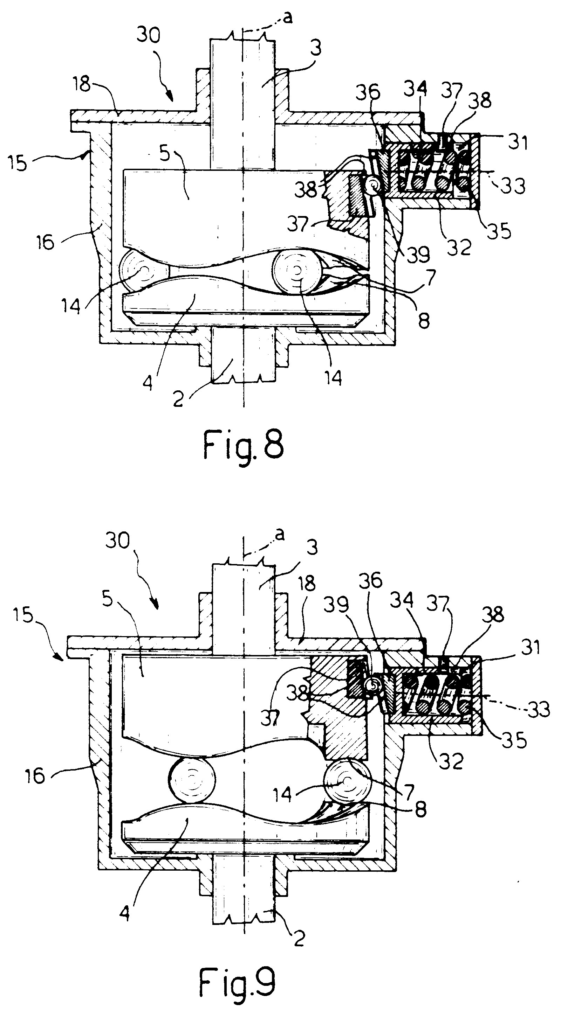

Fig. 8 shows an elevation and a partial axial section of a second embodiment of a mechanism according to the present invention;

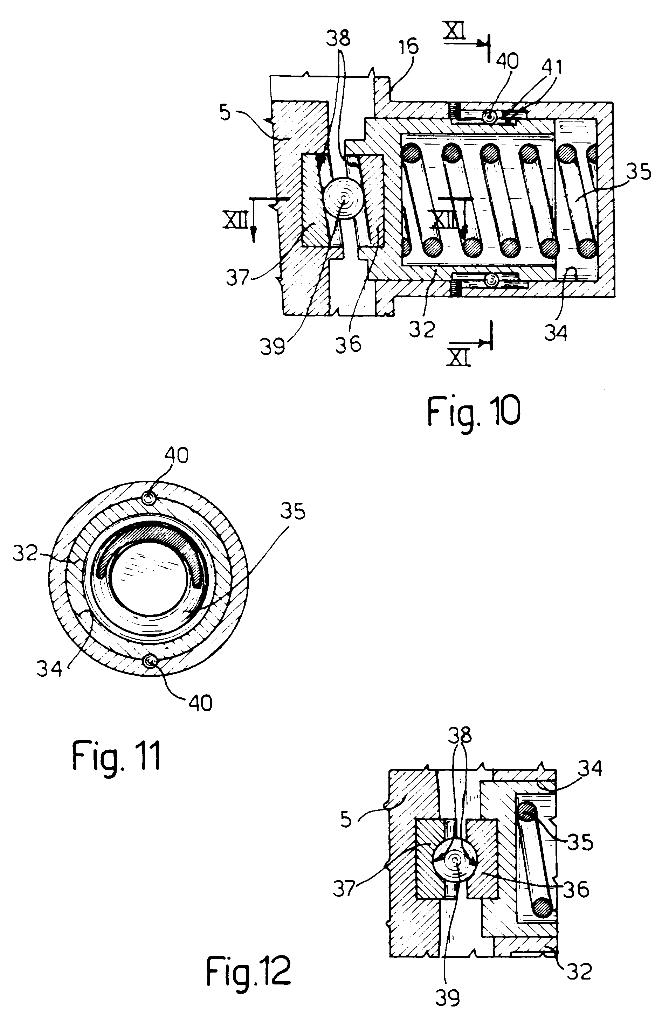

Fig. 9 shows a similar view as in Fig. 8, in a different operating position;

Fig. 10 shows a large scale section of an alternative embodiment of a detail of the mechanism as shown in Fig. 8;

Fig.s 11 and 12 show sections taken along lines XI-XI and XII-XII, respectively, in Fig. 10;

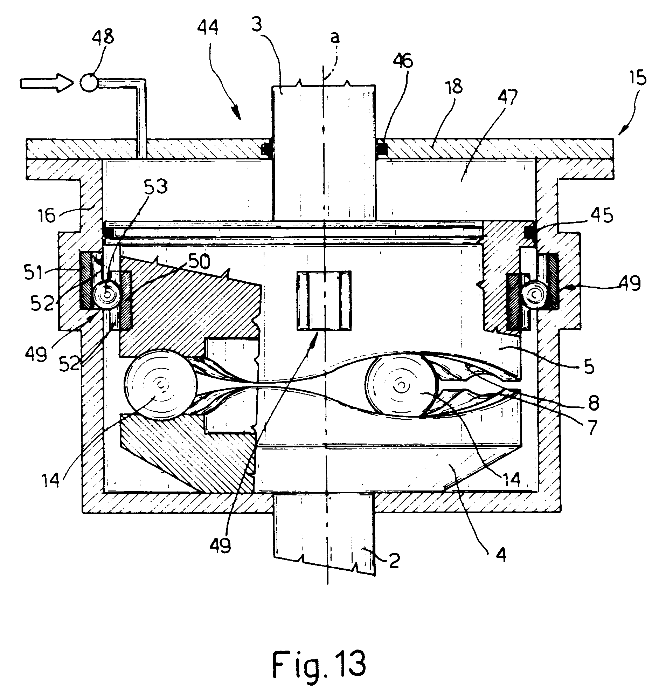

Fig. 13 shows an elevation and a partial axial section of a third embodiment of a mechanism according to the present invention;

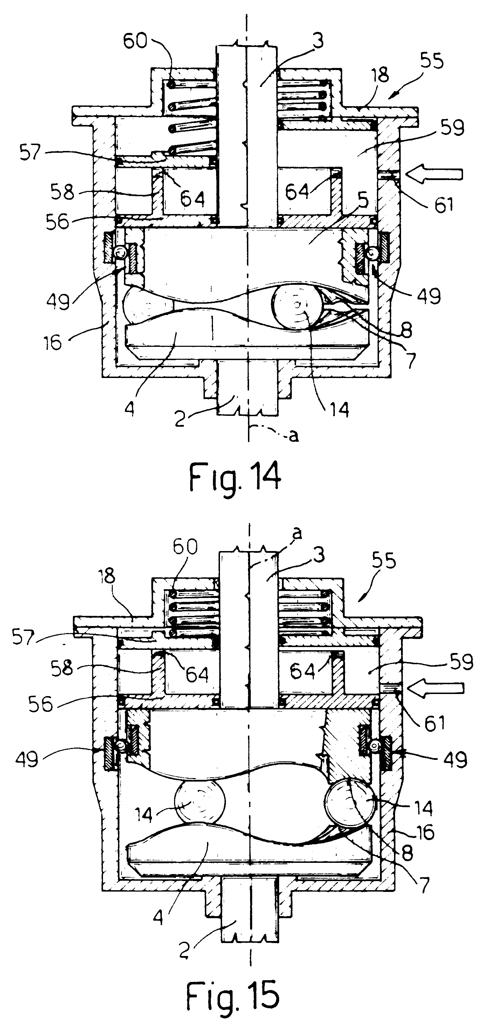

Fig. 14 shows an elevation and a partial axial section of a fourth embodiment of a mechanism according to the present invention;

Fig. 15 shows a similar view as in Fig. 14, in a different operating position;

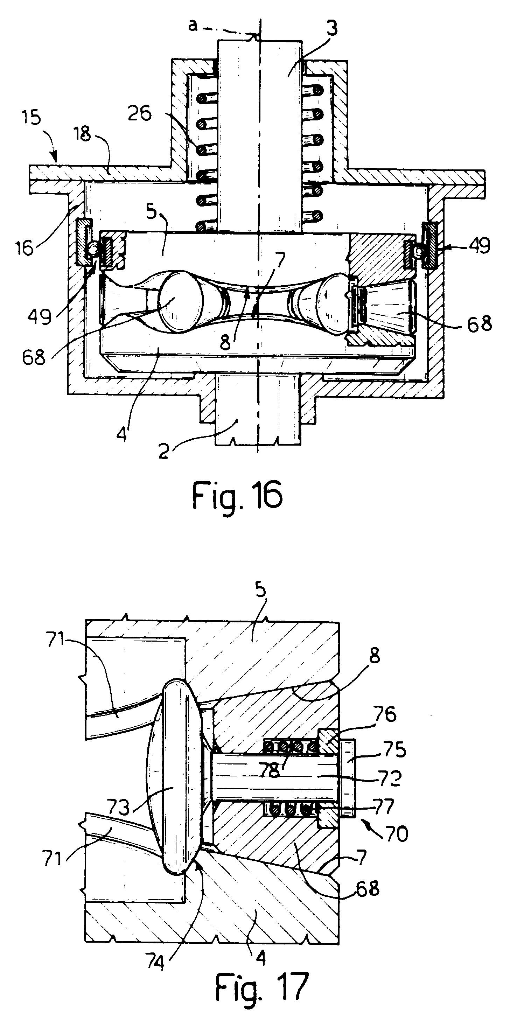

Fig. 16 shows an elevation and a partial axial section of a fifth embodiment of a mechanism according to the present invention;

Fig. 17 shows a large scale section of a detail of the mechanism as shown in Fig. 16;

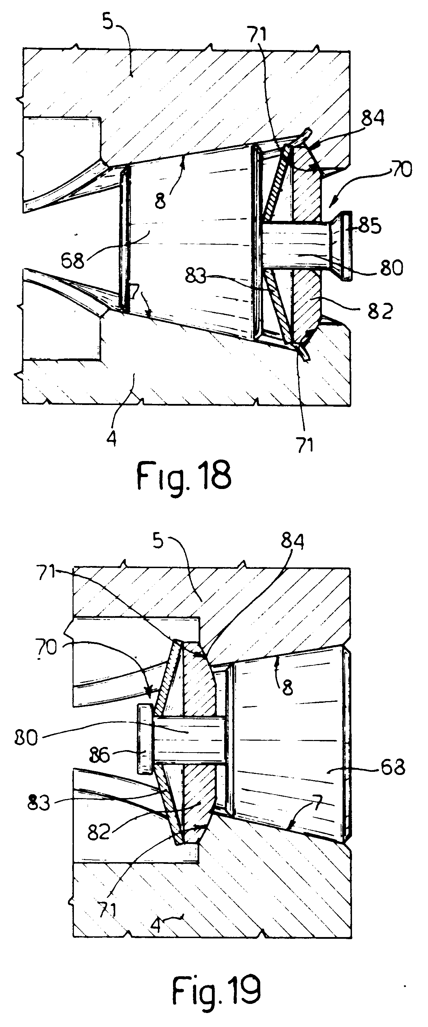

Fig. 18 shows an alternative embodiment of said detail as shown in Fig. 17, and

Fig. 19 shows a second alternative embodiment of the detail as shown in Fig. 17.

With reference to Fig.s 1 and 2, number 1 indicates in its whole a mechanism for the conversion of the rotary motion of a shaft 2 about its axis _a_ in the reciprocating axial motion of a rod 3, coaxial with shaft 2, and conversely.

Mechanism 1 comprises a first disk 4, integral with one end of shaft 2 and coaxial with same, and a second disk 5, integral with one end of rod 3 and coaxial with same; said disks are therefore coaxial with each other, and face each other.

Disks 4, 5 show relevant circular frontal surfaces 7, 8, respectively, undulated and facing each other; particularly, the section view on a plane of surfaces 7,8, carried out by means of a cylindrical surface, coaxial to the mechanism, having an undulated profile defined by several frontal convexities and concavities, alternately succeeding one another.

Said surfaces 7, 8 having, in a radial section view, a concave profile and representing relevant rolling surfaces for a number of spheres 14; said rolling bodies, equivalent in number to the waves of surfaces 7,8, are angularly and equally spaced and of such a dimension so as to substantially roll without sliding on said surfaces 7, 8, but for what described hereinafter.

This requirement is met provided the following relation is true:

$$R > r/f,$$

where
R is the radius of the spheres;
f is the sliding friction coefficient; and
r is the rolling friction parameter.

Disks 4, 5 are housed in a casing 15, essentially cylindrical, consisting of a cup-shaped body 16 having a bottom wall with a through seat 17 for shaft 2, and of a lid 18 fixed on a perimetric flange 19 of body 16. A tubular seat 20, extending along the axis outward casing 15, is provided for lid 18; said seat 20 shows, at one end, an inner annular shoulder 24, delimitating a housing bore 25 of rod 3. A helical spring 26, coaxial with rod 3, is mounted, prestressed, inside seat 20, its ends lying on shoulder 24 and on disk 5, thus applying on the latter such an axial force as may provide for ensuring reciprocal contact between disks 4, 5 and spheres 14 in any operating position of the mechanism. Mechanism 1 consists, moreover, of a pair of pegs 28, extending along the axis from diametrically opposed zones of disk 3 towards lid 18, which slidably engage their respective seats 29 of same lid, thus preventing rotation of disk 3.

According to the present invention, the profile of rolling surfaces 7,8, defined by the development on a plane of a section of same surfaces by means of a cylindrical surface, coaxial to the mechanism, showing a maximum, angle of elevation $\alpha$ (fig.s 3-7) bigger than half of sliding friction angle $\beta$ between spheres and rolling surfaces, the maximum angle of elevation being the maximum inclination of the rolling surfaces profile with respect to a plane $\pi$, orthogonal to the axis of the mechanism.

Moreover, the minimum radius of curvature $R_1$ of the waves convexities is bigger than the minimum radius of curvature $R_2$ of the concavities.

The physical significance of such conditions will be better explained hereinafter.

Mechanism 1 provides for the conversion of rotatory motion into reciprocating motion as follows.

By virtue of rotation of disk 4 and of angular blocking of disk 5, spheres 14 roll without sliding on rolling surfaces 7,8 of said disks, alternately reaching the cavities (Fig. 3) and the convexities (Fig. 4) of said surfaces.

Consequently, disk 5 and rod 3, integral to it, present a linear reciprocating motion, between the botton dead center position as shown in Fig. 1, where the spheres are located in the cavities, and a top dead center position (Fig. 2), where the spheres are lodged at the apex of the convexities of the rolling surfaces. The amplitude of the reciprocating motion of rod 3, therefore, is double the amplitude of the waves of surfaces 7, 8, its frequency (expressed in Hz) being defined by the following relation:

$$\Phi = z^*n/120,$$

where:
z is the number of undulations of surfaces 7, 8;
n is the angular speed of shaft 2.

The above relation can be derived from the comparison of Fig.s 3, 4 and 5. To go from the bottom dead center position (Fig. 3) to the top dead center position (Fig. 5), the spheres must move from one concavity to one convexity of ring 5. For this requirement to be met, ring 4 must rotate of an angle equal to a whole waves pitch, i.e., of an angle equal to 1/z of a round angle.

Therefore, for rod 3 to complete a back and forth stroke, a rotation of 2/z turns of shaft 2 is necessary; consequently, the number of complete oscillations of rod 3 during one turn of shaft 2 is equal to z/2.

In the absence of friction, the spheres would be in equilibrium under the action of spring 26 only in such positions as corresponding to the bottom dead center (stable equilibrium) and to the top dead center balance (unstable equilibrium).

Actually, the friction between rolling surfaces and spheres creates equilibrium zones in the neighborhood of the nominal position of the spheres at bottom dead center (Fig. 6) and top dead center (Fig. 7), that is to say, zones within which the rolling bodies are in equilibrium even in the presence of a displacement from their nominal equilibrium position; within such zones, as a matter of fact, friction is bigger than the tangential component of the contact forces between spheres and rolling surfaces.

Since, according to the present invention, angle of maximum elevation $\alpha$ of the rolling surfaces is bigger than half the friction angle $\beta$, the amplitude of such zones is finite, and it depends on both radius of curvature of the rolling surfaces and on the friction coefficient between spheres and same surfaces; in particular, such zones are delimited by the positions in which the rolling surfaces inclination, with respect to above defined plane $\pi$, is equal to half of friction angle, the relative inclination between the surfaces of the two disks 4,5 in such positions, therefore, being equal to the friction angle.

Since, according to the present invention, the radii of curvature of the convexities and concavities of the waves are different (respectively, bigger and smaller), also the amplitudes of the equilibrium zones at top dead center and at bottom dead center will be different (respectively, bigger and smaller); such amplitudes being indicated, respectively, by L and 1 in Fig.s 6,7. Outside said equilibrium zones, the tangential components of the forces exchanged between spheres and rolling surfaces prevail on friction, thus causing said rolling bodies to move toward the stable equilibrium position at bottom dead center.

During their motion, said rolling bodies are subjected to dynamic tangential forces, in particular, inertial and gravitational; tangential microdeformations are therefore produced at points of contact. Such forces and microdeformation, cause a progressive "drift" of the position of the spheres with respect to their nominal position.

The convexities radius of curvature $R_1$ is chosen in such a way, that the overall positioning error, caused between spheres and disks during stroke between bottom dead center and top dead center, may be smaller than L/2, there being no risk therefore for the rolling bodies to lose stability with consequent impulsive motion toward the stable equilibrium position (bottom dead center). Said positioning error further increases during stroke between top and bottom dead centers; radius of curvature $R_2$ of the concavities is chosen in such a way, that the positioning error of the rolling bodies with respect to the nominal position at bottom dead center may be bigger than 1/2; the rolling bodies are therefore subjected to an impulsive motion (sliding on rolling surfaces) which brings them back inside the stable equilibrium zone.

A self-correction of the rolling bodies (of each body), therefore, takes place during each cycle, thus ensuring a constant synchronization of the mechanism during operation.

Mechanism 1 is reversible and can be utilized to convert a reciprocating motion of rod 2 into a rotary motion of shaft 3.

Such an operation being the reversal of the above described one, an incoming oscillatory motion with a frequency equal to $\Phi$ defining an outgoing rotatory motion having a speed equal to $n = 120 \cdot \Phi / z$. Since said mechanism, at rest, is in a dead center position, in which both spheres and rolling surfaces exchange purely normal forces, it is not capable of providing such a static torque, as may be apt to start shaft 3. It is therefore necessary to provide for an auxiliary starting device.

Fig.s 8 and following show various embodiments of the present invention, all of them equivalent, from the point of view of motion, which will be described in so far as they differ from the previously described mechanism.

Fig.s 8 and 9, show a mechanism 30 in which the elastic force, needed to ensure the mutual contact between spheres and rolling surfaces, as well as the translation constraint of disk 5, are provided for by a single device 31.

Device 31 comprises a piston 32 sliding along an axis 33, orthogonal to axis a of the mechanism inside a tubular, radial seat 34, obtained on a side wall of casing 15.

Piston 32 is thrust by a spring 35 inside casing 15 and presents, on its front face, an inclined plane element 36; a corresponding inclined plane element 37 is housed in a side wall of disk 5, facing element 35; the inclination of the planes of elements 36, 37 is such, as to converge with axis a of the mechanism on the side of rod 3, said planes showing their respective tracks 38 along a vertical plane.

Device 31, moreover, consists of a sphere 39, engaging said tracks 38, and which may roll along them, so as to allow for the reciprocating axial motion of disk 5; the force exerted by spring 35 is such, as to ensure the mutual contact between sphere 39 and tracks 38, and, therefore, as to prevent disk 5 from rotating. By virtue of the inclined plane shape of elements 36, 37, the force transmitted by sphere 39 to element 37 and, consequently, to disk 5, has an axial component, such as to keep disk 5 in contact with spheres 14.

The rotation of piston 32 about its axis is hindered by a peg 37, integral with seat 34, which engages one track 38 longitudinally.

Fig.s 10, 11 and 12 show an alternative embodiment of device 31, the rotation of piston 32 about its seat 34 being prevented by a couple of rolling bodies 40, diametrically opposite, which engage their respective axial tracks 41, obtained on a side wall of piston 32 and inside seat 34.

Fig. 13 shows a mechanism 44, which provides disk 5 with a perimetric seal 45, cooperating with the inner side wall of casing 15. Lid 18 is also equipped with a ring seal 46, cooperating with rod 3. Disk 5, lid 18 and the side walls of body 18, therefore, delimit a fluid-tight chamber 47, connected with a source 48 of pressurized gas, preferably compressed air.

Said gas therefore applies to disk 5 such a thrust, as to ensure the contact with spheres 14.

Rotation of disk 5 is prevented by four spheric devices 49, angularly and equally spaced. Each of said devices 49 consists of a flat plate 50 located on the side wall of disk 5 and of a flat plate 51 housed in one of the side walls of body 16, facing each other. Said plates showing their respective tracks 52, parallel to axis a of the mechanism and engaged by a sphere 53.

Mechanism 44 is particularly suitable for applications requiring high operation speed, in which the utilization of a spring in order to apply the axial load on disk 5 would involve an inadequate dynamic response of the system.

Fig.s 14 and 15 show a mechanism 55, similar to mechanism 44 as shown in Fig. 13, differing from it substantially in that it comprises two fluid-tight slidable pistons 56, 57 between disk 5 and lid 18. A tubular spacer, which can cooperate with piston 57, is provided for piston 56, which is in contact with disk 5; under any operating condition do pistons 56, 57 therefore delimit a fluid-tight chamber 59, whose minimum axial length is equal to the axial length of spacer 58. A spring 60, coaxial with rod 3, is mounted, prestressed, between lid 18 and piston 57, thus thrusting the latter toward piston 56. Body 16 of casing 15 shows a radial aperture 61 for the connection with a source of pressurized gas, located slightly beyond the top dead center position of piston 56; the axial length of the tubular spacer 58 is such that piston 57 may always be found beyond said aperture, with the mechanism in a bottom dead center position, as well, so that chamber 59 may always comunicate with the source of pressurized gas. Besides, tubular spacer 58 is provided with openings 64 allowing the pressurized gas to flow inside it, in the case in which piston 57 is in contact with same spacer 58, as well.

When the pressurized gas is flowing (as shown in Fig.s 14, 15, right-hand side), the behavior of mechanism 55 is totally like that of mechanism 44, as previously described: piston 57 is thrust to its upper end of stroke, in contact with lid 18, and contact between piston 56 and disk 5 is kept up, thus ensuring contact between disks 4, 5 and spheres 14.

When the pressurized gas is not flowing (fig.s 14, 15, left-hand side), mechanism 55 behaves like mechanism 1, as previously described, since spring 60 thrusts piston 57 into contact with piston 56, and, subsequently, the latter against disk 5, thus ensuring the contact load between disks and spheres.

In actual use, gas feeding is conveniently triggered only at high operation speed, so as to eliminate the dynamic setbacks connected with the utilization of the spring, whereas it is discontinued at low operation speed, so as to reduce the overall pressurized gas consumption.

Fig. 16 shows one last embodiment of a mechanism providing for the conversion of motion according to the present invention, particularly suitable for operation under huge loads. Such a mechanism, 67, in its whole, differs from the previously described ones substantially in that it comprises, as rolling bodies inserted between disks 4 and 5, a number of tapered rollers 68, having their radial axis with respect to the disks and whose smaller base is directed toward axis a of said disks.

Rolling surfaces 7, 8 of disks 4, 5 are defined, from a geometrical point of view, by the disks rotation about axis a, as well as by the simultaneous reciprocal translation, along said axis, of a generator, inclined, with respect to the plane in which the rollers axes lie, of an angle equal to the semi-aperture of same rollers. The profile of said surfaces 7,8, obtained by developing on a plane a section thereof by means of a cylindrical surface, coaxial to the mechanism, having a maximum angle of elevation Said surfaces 7, 8 presenting a maximum angle of elevation bigger than half of sliding friction angle $\beta$ between rollers 68 and surfaces 7,8.

Contact between surfaces 7, 8 and rollers 68 is ensured by the elastic load of a spring 26, coaxial with rod 3 and pressed between lid 18 and disk 5, as previously described in connection with device 1. Rotation of disk 5 is blocked by virtue of a number of spherical devices 49, quite similar to those described in connection with mechanism 44.

Rollers 68 are supplied with stopping devices 70, cooperating with the relevant abutment surfaces 71 obtained on disks 4, 5, so as to keep rollers 68 in contact with surfaces 7, 8.

Fig. 17 shows in detail one of rollers 68 along with the relevant stopping device 70. The latter essentially comprises a pin 72, on which roller 68 is mounted, so as to be coaxial with it and slidable, with an end head 73 facing the smaller base of the roller. Head 73 presents, on the side facing roller 18, an annular surface 74 having a spherical profile, with its center on the axis of roller 68 and located on the side of axis a of the mechanism, with respect to said roller.

Abutment surfaces 71 of disks 4, 5 consist of closed annular surfaces presenting slightly concave generators with a radius of curvature bigger than or equal to the radius of surface 74, obtained inside rolling surfaces 7, 8 and capable of cooperating with opposite generators of surface 74 of pin 72.

The latter presenting, at its end opposite head 73, a shoulder 75, conveniently obtained by virtue of plastic deformation, on to which leans stopping ring 76. A helical spring 77 is mounted in a cavity 78 of roller 68, coaxial with pin 72, compressed between stopping ring 76 and a shoulder 77 of roller 68, so as to generate an elastic force pressing roller 68 against surfaces 7, 8, and head 73 of pin 72 against abutment surfaces 71. Fig.s 18, 19 show two alternative embodiments of stopping devices 70 of rollers 68.

In Fig. 18, said stopping device 70 comprises a pin 80, extending along the axis from a bigger base of roller 68, a slidable ring 82, mounted on pin 80 and a cup-shaped spring 83, inserted between roller 68 and ring 82.

The latter shows, on one of its sides opposite roller 68, an annular surface 84 having a spherical profile, its center of curvature being located on the axis of roller 68, on the side of axis a of the mechanism, and cooperating with surfaces 71 of disks 4, 5, obtained, in the present case, on the outer periphery of surfaces 7, 8. Cup-shaped spring 83 generates on both roller 68 and ring 82 an axial elastic load, such as to ensure the latters' contact with surfaces 7, 8 and 71, respectively. Pin 80 presents an end shoulder 85 to prevent the extraction, along the axis, of ring 82 and of spring 83 either before the mechanism is assembled, or due to disassembly.

The embodiment of device 70, as shown in Fig. 19, is very similar to the one described in Fig. 18; in this case, pin 80 extends from the smaller base of the roller, and cup-shaped spring 83 is located between an end shoulder 86 of pin 80 and ring 82, the latter presenting annular surface 84, having a spherical profile, on its side facing roller 68. Consequently, abutment surfaces of disks 4, 5 are obtained on the inner edge of rolling surfaces 7, 8.

A detailed examination of the characteristics of the mechanisms embodied according to the present invention highlights the advantages connected with said mechanisms.

In particular, the geometry of rolling surfaces 7, 8, as previously described, is such, as to ensure perfect synchronization of rolling bodies, as well as to prevent progressive displacements of said rolling bodies with respect to their nominal position.

## Claims

1. A mechanism (1;30;44;55;67) providing for the conversion of a rotary motion about an axis (a) into a linear reciprocating motion along the same axis, and vice versa, comprising:
   - a first element (4) coaxial with said axis (a) and rotatable about it;
   - a second element (5) coaxial with and facing said first element, prevented from rotating and constrained to a translation motion along said axis (a),

   said elements presenting relevant circular undulated rolling surfaces (7,8) facing each other, a section view of said undulated rolling surfaces taken along a cylindrical surface coaxial to the same mechanism and developed on a plane having an undulated profile defined by a plurality of frontal convexities and concavities, alternately succeeding one another;
   - a plurality of rolling bodies (14;68) equal in number, at most, to the waves of said rolling surfaces (7,8) and inserted between said rolling surfaces (7,8); and
   - pressing means (26,35,60) capable of generating an axial thrust such as to ensure mutual contact between said elements (4,5,) and said rolling bodies (14;68);

characterised in that the maximum inclination ($\alpha$) of the profile of said rolling surfaces with respect to a plane ($\pi$) orthogonal to the axis (a) of said mechanism (1) is bigger than half of sliding friction angle ($\beta$) between said rolling bodies (14;68) and said rolling surfaces (7,8), the minimum radius of curvature (R1) of each convexity being bigger than the minimum radius of curvature (R2) of each concavity.

2. A mechanism as claimed in Claim 1, characterized by the fact that said minimum radii of curvature ($R_1$, $R_2$) of said convexities and concavities of each wave of said profile are chosen so that the positioning error of said rolling bodies (14;68) during their motion, by virtue of the tangential forces acting on same bodies, may be smaller than half the amplitude (L) of an equilibrium zone of said rolling bodies (14;68) at top dead center and bigger than half the amplitude (1) of an equilibrium zone of said rolling bodies (14;68) at bottom dead center.

3. A mechanism as claimed in Claims 1 and 2, characterized by the fact that it comprises a casing (15) housing said elements and angular stopping means (28;31;49) of said second element (5) with respect to said casing (15).

4. A mechanism as claimed in Claim 3, characterized by the fact that said angular stopping means comprise at least one axial eccentric pin (28), integral with said second element (5) and a seat (29) of said casing slidably engaged by said pin (28).

5. A mechanism as claimed in Claim 3, characterized by the fact that said angular stopping means comprise at least one sphere (39;53), engaging relevant tracks (38;52), respectively, obtained on a side wall of said second element (5) and on a side wall of said casing (15) and located along a plane containing axis (a) of said mechanism.

6. A mechanism as claimed in any one of above Claims, characterized by the fact that said pressing means comprise at least one spring (26) inserted between said second element (5) and one wall of said casing (15) facing the former.

**7.** A mechanism as claimed in Claim 5, characterized by the fact that said tracks (38) are obtained on inclined plane elements (36,37), constrained with respect to said second element (5) and to said casing (15); the inclination of said inclined planes being such, that the force exchanged between said sphere (39) and said second element (5) may present an axial component capable of ensuring the contact between said elements (4,5) and said rolling bodies; said pressing means comprising at least one spring (35) acting on one of said inclined plane elements (36), so as to ensure the contact between said inclined plane elements (36,37) and said sphere (39).

**8.** A mechanism as claimed in any one of Claims 1 to 6, characterized by the fact that said pressing means comprise a pressurized gas fed into a fluid-tight chamber (47,59) contained between said casing (15) and said second element (5).

**9.** A mechanism as claimed in Claim 8, characterized by the fact that said fluid-tight chamber (59) is contained between said second element (5) and a fluid-tight piston (57), loaded by resilient means (60) towards said second element (5).

**10.** A mechanism as claimed in any one of above Claims, characterized by the fact that said rolling bodies are spheres (14), said rolling surfaces (7,8) consisting of the relevant rolling tracks for said spheres (14) having, in a radial section view, a concave profile.

**11.** A mechanism as claimed in any one of Claims 1 to 9, characterized by the fact that said rolling bodies are tapered rollers (68), having a radial axis with respect to said axis (a) of the mechanism and with their smaller base directed inwards said mechanism.

**12.** A mechanism as claimed in Claim 11, characterized by the fact that it comprises axial stopping means (70) of said rollers (68), such as to keep the latters in contact with said rolling tracks (7,8).

**13.** A mechanism as claimed in Claim 12, characterized by the fact that said axial stopping means (70) of said rollers (68) comprise, for each roller (68), a pin (72), coaxial with the roller (68) itself, an abutment element (73;82) on said pin (72) having an annular surface (74;84) cooperating with its respective abutment surfaces (71), obtained on said elements (4,5) along said rolling surfaces (7,8), and resilient means (77;83) exerting an elastic force between said roller (68) and said abutment element (73;82), so as to keep the latter in contact with said rolling surfaces (7,8) and said abutment surfaces (71), respectively.

**14.** A mechanism as claimed in Claim 13, characterized by the fact that said annular surface (74,84) of said abutment element (73;82) shows a spherical profile with a center of curvature on the axis of said roller (68) on the side of axis (a) of said mechanism.

**15.** A mechanism as claimed in either Claim 13 or 14, characterized by the fact that said abutment element is one end head (73) of said pin, said roller (68) being axially slidable with respect to said pin.

**16.** A mechanism as claimed in either Claim 13 or 14, characterized by the fact that said abutment element is a ring (82), coaxial with said pin (72) and slidable with respect to it.

**17.** A mechanism as claimed in any one of Claims 13 to 16, characterized by the fact that said resilient means comprise a helical spring (77), coaxial with said pin (72).

**18.** A mechanism as claimed in any one of Claims 13 to 16, characterized by the fact that said resilient means comprise a cup-shaped spring (83).

**Patentansprüche**

**1.** Mechanismus (1; 30; 44; 55; 67) zum Umwandeln einer Drehbewegung um eine Achse (a) in eine geradlinige Hin- und Herbewegung entlang der gleichen Achse und umgekehrt mit:
einem mit der Achse (a) gleichachsigen und um sie drehbaren ersten Element (4);
einem mit dem ersten Element gleichachsigen und ihm gegenüberliegenden zweiten Element (5), dessen Drehung verhindert wird und das gezwungen ist, eine Translationsbewegung entlang der Achse (a) zu vollführen, wobei die Elemente relevante, einander gegenüberliegende kreisförmige Wellenrollflächen (7, 8) haben und eine Schnittansicht der Wellenrollflächen entlang einer mit dem Mechanismus gleichachsigen Zylinderfläche, die auf einer Ebene abgewickelt ist, ein Wellenprofil hat, das durch mehrere abwechselnd aufeinanderfolgende stirnseitige Konvexitäten und Konkavitäten definiert ist;
mehreren Rollkörpern (14; 68), deren Anzahl höchstens den Wellen der Rollflächen (7, 8) entspricht und die zwischen die Rollflächen (7, 8) eingefügt sind; und einer Druckeinrichtung (26, 35, 60), die einen Axialschub so erzeugen kann, daß eine gegenseitige Berührung zwischen den Elementen (4, 5) und den Rollkörpern (14; 68) gewährleistet ist;
dadurch gekennzeichnet, daß die höchste Neigung ($\alpha$) des Profils der Rollflächen gegenüber einer senkrecht zu der Achse (a) des Mechanismus (1) stehenden Ebene ($\pi$) größer ist als die Hälfte eines Gleitreibungswinkels ($\beta$) zwischen den Rollkörpern (14; 68) und den Rollflächen (7, 8), wobei der kleinste Rundungshalbmesser ($R_1$) jeder Konvexität größer als der kleinste Rundungshalbmesser ($R_2$) jeder Konkavität ist.

2. Mechanismus nach Anspruch 1, dadurch gekennzeichnet, daß die kleinsten Rundungshalbmesser ($R_1$, $R_2$) der Konvexitäten und Konkavitäten jeder Welle des Profils so gewählt sind, daß der Positionierungsfehler der Rollkörper (14; 68) während ihrer Bewegung aufgrund der auf die Körper wirkenden Tangentialkräfte kleiner als die Hälfte der Amplitude (L) einer Gleichgewichtszone der Rollkörper (14; 68) in einem oberen Totpunkt und größer als die Hälfte der Amplitude (l) einer Gleichgewichtszone der Rollkörper (14; 68) in einem unteren Totpunkt sein kann.

3. Mechanismus nach Anspruch 1 und 2, dadurch gekennzeichnet, daß er ein Gehäuse (15) aufweist, in dem die Elemente und eine Winkelanschlageinrichtung (28; 31; 49) des zweiten Elements gegenüber dem Gehäuse (15) untergebracht sind.

4. Mechanismus nach Anspruch 3, dadurch gekennzeichnet, daß die Winkelanschlageinrichtung mindestens einen axialen Exzenterstift (28) in einem Stück mit dem zweiten Element (5) und einen Sitz (29) des Gehäuses aufweist, mit dem der Stift (28) einen gleitenden Eingriff herstellt.

5. Mechanismus nach Anspruch 3, dadurch gekennzeichnet, daß die Winkelanschlageinrichtung mindestens eine Kugel (39; 53) aufweist, die jeweils einen Eingriff mit relevanten Laufbahnen (38; 52) herstellt, die an einer Seitenwand des zweiten Elements (5) und an einer Seitenwand des Gehäuses (15) ausgebildet sind und sich auf einer Ebene befinden, die die Achse (a) des Mechanismus enthält.

6. Mechanismus nach einem der vorhergegangenen Ansprüche, dadurch gekennzeichnet, daß die Druckeinrichtung mindestens eine Feder (26) aufweist, die zwischen das zweite Element (5) und eine ihm gegenüberliegende Wand des Gehäuses (15) eingefügt ist.

7. Mechanismus nach Anspruch 5, dadurch gekennzeichnet, daß die Laufbahnen (38) an Elementen (36, 37) mit schiefer Ebene ausgebildet sind, die gegenüber dem zweiten Element (5) und dem Gehäuse (15) zwangsläufig geführt sind, wobei die Neigung der schiefen Ebenen so ist, daß die zwischen der Kugel (39) und dem zweiten Element (5) ausgetauschte Kraft eine Axialkomponente aufweisen kann, die die Berührung zwischen den Elementen (4, 5) und den Rollkörpern gewährleisten kann, und die Druckeinrichtung mindestens eine Feder (35) aufweist, die auf eines (36) der Elemente mit schiefer Ebene wirkt, um die Berührung zwischen den Elementen (36, 37) mit schiefer Ebene und der Kugel (39) zu gewährleisten.

8. Mechanismus nach einem der Ansprüche 1 bis 6, dadurch gekennzeichnet, daß die Druckeinrichtung ein Druckgas aufweist, das in eine fluiddichte Kammer (47, 59) geleitet wird, die zwischen dem Gehäuse (15) und dem zweiten Element (5) enthalten ist.

9. Mechanismus nach Anspruch 8, dadurch gekennzeichnet, daß die fluiddichte Kammer (59) zwischen dem zweiten Element (5) und einem fluiddichten Kolben (57) enthalten ist, der durch eine federnde Einrichtung (60) in Richtung auf das zweite Element (5) belastet ist.

10. Mechanismus nach einem der vorhergegangenen Ansprüche, dadurch gekennzeichnet, daß die Rollkörper Kugeln (14) sind, wobei die Rollflächen (7, 8) aus den relevanten Rollbahnen für die Kugeln (14) bestehen, die in radialer Schnittansicht ein konkaves Profil haben.

11. Mechanismus nach einem der Ansprüche 1 bis 9, dadurch gekennzeichnet, daß die Rollkörper Kegelrollen (68) sind, die eine Radialachse gegenüber der Achse (a) des Mechanismus haben und deren kleinere Basis einwärts zu dem Mechanismus gerichtet ist.

12. Mechanismus nach Anspruch 11, dadurch gekennzeichnet, daß er eine axiale Anschlageinrichtung (70) der Rollen (68) derart aufweist, daß die letzteren in Berührung mit den Rollbahnen (7, 8) gehalten werden.

**13.** Mechanismus nach Anspruch 12, dadurch gekennzeichnet, daß die axiale Anschlageinrichtung (70) der Rollen (68) für jede Rolle (68) aufweist: einen mit der Rolle (68) selbst gleichachsigen Stift (72), ein Stoßelement (73; 82) an dem Stift (72) mit einer Ringfläche (74; 84), die mit ihren jeweiligen Stoßflächen zusammenwirkt, die an den Elementen (4, 5) entlang der Rollflächen (7, 8) ausgebildet sind, und eine federnde Einrichtung (77; 83) die eine Federkraft zwischen der Rolle (68) und dem Stoßelement (73; 82) ausübt, um das letztere in Berührung mit den Rollflächen (7, 8) bzw. den Stoßflächen (71) zu halten.

**14.** Mechanismus nach Anspruch 13, dadurch gekennzeichnet, daß die Ringfläche (74; 84) des Stoßelements (73; 82) ein sphärisches Profil mit einem Rundungshalbmesser auf der Achse der Rolle (68) auf der Seite der Achse (a) des Mechanismus aufweist.

**15.** Mechanismus nach Anspruch 13 oder 14, dadurch gekennzeichnet, daß das Stoßelement ein Endkopf (73) des Stifts ist, wobei die Rolle (68) gegenüber dem Stift axial gleitend ist.

**16.** Mechanismus nach Anspruch 13 oder 14, dadurch gekennzeichnet, daß das Stoßelement ein Ring (82) ist, der gleichachsig mit dem Stift (72) und ihm gegenüber gleitend ist.

**17.** Mechanismus nach einem der Ansprüche 13 bis 16, dadurch gekennzeichnet, daß die federnde Einrichtung eine mit dem Stift (72) gleichachsige Schraubenfeder (77) aufweist.

**18.** Mechanismus nach einem der Ansprüche 13 bis 16, dadurch gekennzeichnet, daß die federnde Einrichtung eine Tellerfeder (83) aufweist.

**Revendications**

**1.** Mécanisme (1 ; 30 ; 44 ; 55 ; 67) permettant la conversion d'un mouvement rotatif autour d'un axe (a) en mouvement linéaire alternatif le long du même axe, et vice versa, comprenant :
- un premier élément (4) coaxial avec ledit axe (a) et pouvant tourner autour de celui-ci ;
- un second élément (5) coaxial et faisant face audit premier élément, bloqué en rotation et contraint à un mouvement de translation le long dudit axe (a),

lesdits éléments présentant des surfaces de roulement respectives circulaires ondulées (7,8) se faisant face, une section de ces surfaces de roulement ondulées suivant une surface cylindrique coaxiale au même mécanisme et développée sur un plan présentant un profil ondulé défini par un ensemble de convexités et de concavités vues de face et se succédant alternativement l'une à l'autre ;
- un ensemble de corps de roulement (14, 68) en nombre égal, au plus, aux ondulations desdites surfaces de roulement (7, 8) et insérés entre lesdites surfaces de roulement (7, 8); et
- des moyens de pression (26, 35, 60) pouvant générer une poussée axiale permettant d'assurer le contact mutuel entre lesdits éléments (4, 5) et lesdits corps de roulement (14, 68);

caractérisé en ce que l'inclinaison maximale ($\alpha$) du profil desdites surfaces de roulement par rapport à un plan ($\pi$) orthogonal à l'axe (a) dudit mécanisme (1) est supérieure à la moitié de l'angle de frottement de glissement ($\beta$) entre lesdits corps de roulement (14, 68) et lesdites surfaces de roulement (7, 8), le rayon de courbure minimal (R1) de chaque convexité étant supérieur au rayon de courbure minimal (R2) de chaque concavité.

**2.** Mécanisme selon la revendication 1, caractérisé par le fait que lesdits rayons de courbure minimaux (R1, R2) desdites convexités et concavités de chaque ondulation dudit profil sont choisis de manière à ce que l'erreur de positionnement de chaque corps de roulement (14, 68) pendant leur mouvement, en vertu des forces tangentielles agissant sur les mêmes corps, peut être inférieure à la moitié de l'amplitude (L) d'une zone d'équilibre desdits corps de roulement (14, 68) en haut de course et supérieure à la moitié de l'amplitude (1) d'une zone d'équilibre desdits corps de roulement (14, 68) en fond de course.

**3.** Mécanisme selon la revendication 1 ou 2, caractérisé par le fait qu'il comprend une enveloppe (15) renfermant lesdits éléments et des moyens de blocage angulaire (28, 31, 49) dudit second élément (5) par rapport à ladite enveloppe (15).

**4.** Mécanisme selon la revendication 3, caractérisé par le fait que lesdits moyens de blocage angulaire comprennent au moins une goupille axiale excentrée (28), faisant partie intégrante dudit second élément (5) et un siège (29) de ladite enveloppe en contact glissant avec ladite goupille (28).

**5.** Mécanisme selon le revendication 3, caractérisé par le fit que lesdits moyens de blocage angulaire comprennent au moins une sphère (39, 53) en contract avec des pistes de roulement correspondantes (38, 52), respectivement, obtenues sur une paroi latérale dudit second élément (5) et sur une paroi latérale de ladite enveloppe (15) et situées suivant un plan contenant l'axe (a) dudit mécanisme.

**6.** Mécanisme selon l'une des revendications précédentes, caractérisé par le fait que lesdits moyens de pression comprennent au moins un ressort (26) inséré entre ledit second élément (5) et une paroi de ladite enveloppe (15) faisant face su précédent.

**7.** Mécanisme selon la revendication 5, caractérisé par le fait que lesdites pistes (38) sont obtenues sur des éléments de plan incliné (36, 37), retenus en contrainte par rapport au dit second élément (5) et à ladite enveloppe (15) ; l'inclinaison desdits plans inclinés étant telle que la force d'interaction entre ladite sphère (39) et ledit second élément (5) peut présenter une composante axiale permettant d'assurer le contact entre lesdits éléments (4, 5) et lesdits corps de roulement ; lesdits moyens de pression comprenant au moins un ressort (35) agissant sur l'un des éléments de plan incliné (36) de manière à assurer le contact entre lesdits éléments de plan incliné (36, 37) et ladite sphère (39).

**8.** Mécanisme selon l'une des revendications 1 à 6, caractérisé par le fait que lesdits moyens de pression comprennent un gaz sous pression contenu dans une chambre étanche au fluide (47, 59) logée entre ladite enveloppe (15) et ledit second élément (5).

**9.** Mécanisme selon la revendication 8, caractérisé par le fait que ladite chambre étanche au fluide (59) est contenue entre ledit second élément (5) et un piston étanche au fluide (57), poussé par des moyens élastiques (60) vers ledit second élément (5).

**10.** Mécanisme selon l'une des revendications précédentes, caractérisé par la fait que lesdits corps de roulement sont des sphères (14), lesdites surfaces de roulement (7, 8) constituées par les pistes de roulement correspondant aux dites sphères (14) ayant, en section radiale un profil concave.

**11.** Mécanisme selon l'une des revendications 1 à 9, caractérisé par le fait que lesdits corps de roulement sont des rouleaux coniques (68) dont l'axe est radial par rapport au dit axe (a) du mécanisme et dont la petite base est dirigée vers l'intérieur dudit mécanisme.

**12.** Mécanisme selon la revendication 11, caractérisé par le fait qu'il comprend des moyens de blocage axial (70) desdits rouleaux (68) permettant de garder ces derniers en contact avec lesdites pistes de roulement (7, 8).

**13.** Mécanisme selon la revendication 12, caractérisé par le fait que lesdits moyens de blocage axial (70) desdits rouleaux (68) comprennent, pour chaque rouleau (68), une goupille (72) coaxiale avec le rouleau (68) lui-même, un butoir (73, 82) sur ladite goupille (72) ayant une surface annulaire (74, 84) coopérant avec ses surfaces de butée respectives (71) obtenues sur lesdits éléments (4, 5) le long desdites surfaces de roulement (7, 8), et des moyens élastiques (77, 83) exerçant une force élastique entre ledit rouleau (68) et ledit butoir (73, 82) permettant de garder ce dernier en contact avec lesdites surfaces de roulement (7, 8) et lesdites surfaces de butée (71), respectivement.

**14.** Mécanisme selon la revendication 13, caractérisé par le fait que ladite surface annulaire (74, 84) dudit butoir (73, 82) présente un profil sphérique dont la centre de courbure est situé sur l'axe dudit rouleau (68) du côté de l'axe (a) dudit mécanisme.

**15.** Mécanisme selon la revendication 13 ou 14, caractérisé par le fait que ledit butoir est constitué par une tête d'éxtremité (73) de ladite goupille, ledit rouleau (68) pouvant glisser axialement par rapport à ladite goupille.

**16.** Mécanisme selon la revendication 13 ou 14, caractérisé par le fait que ledit butoir est un anneau (82) coaxial avec ladite goupille (72) et mobile en glissement par rapport à celle-ci.

**17.** Mécanisme selon l'une des revendications 13 à 16, caractérisé par le fait que lesdits moyens élastiques comprennent un ressort hélicoïdal (77) coaxial avec ladite goupille (72).

**18.** Mécanisme selon l'une des revendications 13 à 16, caractérisé par le fait que lesdits moyens élastiques comprennent un ressort en forme de coupelle (83).

Fig. 1

Fig. 2

Fig.3

Fig.4

Fig.5

Fig.6

Fig.7

Fig. 8

Fig. 9

Fig. 10

Fig. 11

Fig. 12

Fig. 13

Fig. 14

Fig. 15

Fig. 16

Fig. 17

Fig. 18

Fig. 19